# EUROPEAN PATENT SPECIFICATION

(11) **EP 1 760 350 B1**
(45) Date of publication and mention of the grant of the patent: **20.08.2008**
(21) Application number: 06018150.0
(22) Date of filing: 30.08.2006
(51) Int. Cl.: F16D 55/228, F16D 65/092

(54) **Disk brake**
Scheibenbremse
Frein à disque

(30) Priority: 30.08.2005 JP 2005249312
(43) Date of publication of application: 07.03.2007
(73) Proprietor: Yamaha Hatsudoki Kabushiki Kaisha, Iwata-shi, Shizuoka-ken 438-8501 (JP)
(72) Inventor: Kawai, Hideo, Iwata-shi, Shizuoka-ken 438-8501 (JP); Abe, Manabu, Iwata-shi, Shizuoka-ken 438-8501 (JP); Migita, Itsurou, Iwata-shi, Shizuoka-ken 438-8501 (JP); Ura, Kazuaki, Iwata-shi, Shizuoka-ken 438-8501 (JP); Kurita, Masatoshi, Iwata-shi, Shizuoka-ken 438-8501 (JP); Ikki, Fujio, Iwata-shi, Shizuoka-ken 438-8501 (JP)
(74) Representative: Grünecker, Kinkeldey, Stockmair & Schwanhäusser Anwaltssozietät

(56) References cited:
- EP-A1- 1 113 184
- EP-A2- 0 710 777
- WO-A-94/07049
- WO-A-03/071152
- DE-A1- 10 212 670

## Description

The present invention relates to a disk braking device, in which a disk plate fixed to a wheel is interposed by friction members, and a motorcycle provided with the disk braking device.

In, for example, a disk braking device for motorcycles, the number of pistons is in some cases increased to, for example, opposite four pots or six pots to increase a braking effective diameter from the viewpoint of increasing a braking force. Also, from the viewpoint of making a piston pushing force uniform, an entering side of a disk plate is made smaller in cylinder area than a leaving side (for example, Patent Document 1).

Patent Document 1: JP-A-5-116668

By the way, with a construction, in which the number of pistons is increased to increase a braking effective diameter, as in the conventional device, a pad unit is lengthened in circumferential dimension corresponding to an increase of the pistons in number. Consequently, there is a fear that warp is generated in friction members due to frictional heat or the like and the friction members become non-uniform in bearing against a disk plate whereby reaction at the time of braking is deteriorated.

Here, in order to suppress warp of the friction members and dispersion in bearing, it is effective to divide the pad unit into sections, which correspond in number to the pistons. However, simple division of the pad unit causes a problem that a caliper becomes large in size and a difference in a service life of the friction members is generated according to the magnitude of a cylinder area.

WO 94/07049 discloses a disc braking device comprising two piston holding portions, said holding portions being arranged on opposite sides of the disc plate. Each piston holding portion is provided with three hydraulic pistons. Each hydraulic piston presses a pad against the respective surface of the disc plate. Therein, the frictional material areas of these pads increase from the "leading" pad to the "trailing" pad. Similarly, the hydraulic piston diameter also increases from the "leading" piston to the "trailing" piston. This relation of the frictional material areas of the pads and of the hydraulic piston diameters are provided to compensate for increased heat build up at the pad/disc interface when moving from leading to the trailing ends.

Further, EP 1 113 184 A1 discloses a further disc brake with two piston holding portions provided on opposite disc plate sides. Each caliber is subdivided into a leading part (leading brake shoe) and a trailing part (trailing brake shoe), said leading and trailing parts being interconnected by a hinge allowing mainly movements in the direction of the axis of the pin. The leading brake shoe is moved by a leading piston. Further, the trailing brake shoe is moved by a further piston having the same piston diameter than the leading piston and by an additional piston having a larger piston diameter.

The invention has been thought of in view of the conventional situation and has its object to provide a disk braking device capable of suppressing warp of friction members and deterioration in reaction at the time of braking and suppressing generation of a difference in a service life of the friction members in the case where pistons are increased in number to heighten a braking force.

This objective is solved in an inventive manner by a disk braking device comprising a disk plate fixed to a wheel, a pad unit that generates a frictional force between it and the disk plate, and a piston mechanism that brings the pad unit into pressure contact with the disk plate, wherein the piston mechanism comprises a plurality of piston portions having different total cylinder areas, and wherein the pad unit comprises a plurality of pad unit portions, each comprising a base plate, against which the piston abuts, and a friction member fixed to the base plate to abut against the disk plate and having a total friction member area corresponding to the respective total cylinder areas, wherein the plurality of piston portions are having a different number of pistons, said pistons being the same in cylinder area, the pad unit comprises the pad unit portions respectively corresponding to the piston portions, and the respective pad unit portions have a total fiction member area corresponding to a total cylinder area of the respective piston portions.

Preferably, the friction members are the same in shape. Further, preferably, the friction members are arranged radially about a point p1 positioned close to a center of the disk plate p.

Beneficially, those ones out of the respective piston portions, which are small in total cylinder area, are arranged on an entering side of the disk plate.

Further, beneficially the disk braking device further comprises a torque receiver that hinders movements of the pad unit portions or the pad unit, wherein the torque receiver is arranged between the respective pad unit portions or the respective pad units in a manner to bear torque exerted by that pad unit portion or that pad unit, which is small in total friction member area.

Yet further, beneficially the disk braking device further comprises a caliper body that holds the piston mechanism, wherein the caliper body comprises piston holding portions arranged in opposition to each other with the disk plate therebetween, a bridge that joins the piston holding portions together in a manner to straddle the disk plate, and wherein the bridge is arranged offset toward any one of the pad unit portions.

Therein, preferably the bridge is arranged toward a pad unit portion, which is small in total friction member area, or the bridge is arranged toward a pad unit portion, which is large in total friction member area, or the bridge is formed integral with the torque receiver.

According to another preferred embodiment, a piston interval of one out of the piston portions, which is large in total cylinder area, is set to be smaller than an interval between a piston in a piston portion, which is small in total cylinder area, and a piston in a piston portion, which is adjacent to the piston portion with the torque bearer therebetween and is large in total cylinder area.

According to still another preferred embodiment, the disk braking device further comprises a caliper body that holds the piston mechanism, wherein the caliper body comprises a pair of piston holding portions arranged opposingly with the disk plate therebetween, one of the piston holding portions is formed with a work hole for formation of a piston holding hole, and the other of the piston holding portions is formed with a mount hole for mounting the caliper body on a vehicle side.

There is further disclosed a motorcycle comprising the disk braking device according to any one of the above embodiments.

In the following, the present invention is explained in greater detail with respect to several embodiments thereof in conjunction with the accompanying drawings, wherein:
- Fig. 1: is a side view showing a disk braking device according to a first embodiment,
- Fig. 2: is a cross sectional view showing the disk braking device,
- Fig. 3: is a view showing a construction of piston portions and pad units of the disk braking device,
- Fig. 4: is a view showing a construction of the pad units,
- Fig. 5: is a plan view showing a caliper body of the disk braking device,
- Fig. 6: is a view showing a construction of the pad units,
- Fig. 7: is a view showing a construction of piston portions and pad units not falling under the scope of the appended claims,
- Fig. 8: is a view showing a construction of pad units according to a modification of the embodiment, and
- Fig. 9: is a view showing a construction of a bridge according to a modification of the embodiment.

### Description of Reference Numerals and Signs:

1: disk braking device
2: front wheel
5: disk plate
6: pad unit
6a, 6b: pad unit portion
7: piston mechanism
7a, 7b: piston portions
8: caliper body
8a to 8c: piston holding portion
8a' to 8c': piston holding hole
8d: bridge
8e: mount boss
8h: torque bearer
9a to 9c: piston
15: base plate
16: friction member
23: small diameter piston
24: large diameter piston
25: small pad unit
26: large pad unit
s1 to s5: cylinder area
p1 to p5: pressure contact area

Embodiments will be described below with reference to the accompanying drawings.

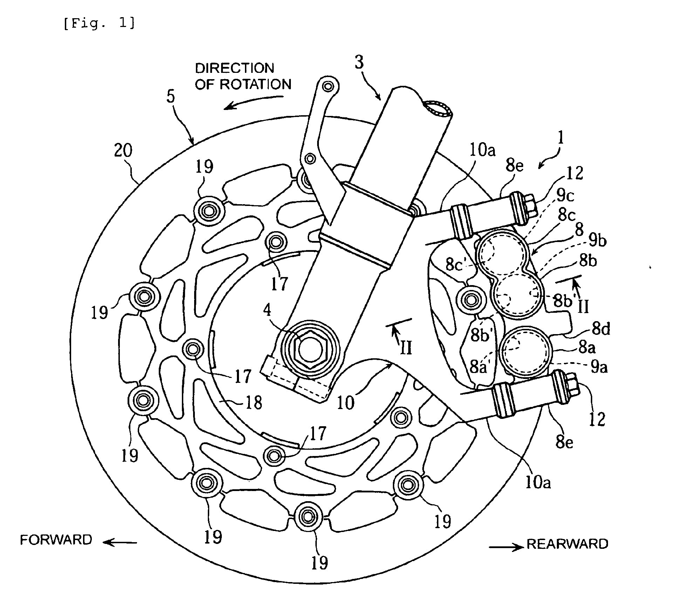

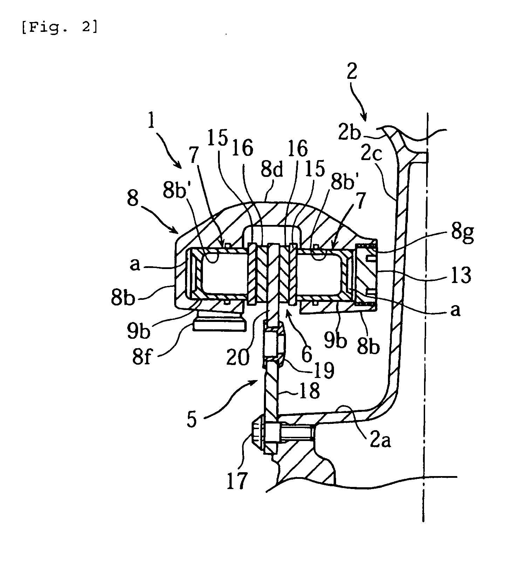

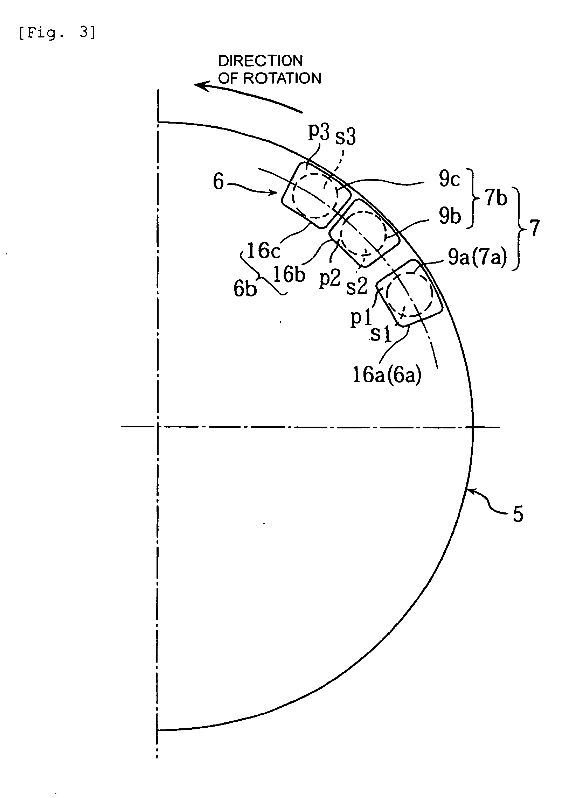

Figs. 1 to 6 are views illustrating a disk braking device according to a first embodiment. The embodiment will be described by way of a disk braking device for motorcycles.

In the drawings, the reference numeral 1 denotes a front disk braking device arranged on a front wheel 2 of a motorcycle. The front wheel 2 is journaled by a lower end of a front fork 3. The front fork 3 is supported on a head pipe, which is fixed to a front end of a vehicle body frame (not shown), to be able to be steered left and right, and a steering handle (not shown) is mounted to an upper end of the front fork 3.

The front wheel 2 is constructed such that a hub 2a and a rim 2b with a tire (not shown) mounted thereto are connected to each other by means of a plurality of spokes. An axle shaft 4 is inserted into the hub 2a with a bearing (not shown) therebetween, the axle shaft 4 being fixed to the front fork 3.

A rearwardly projecting caliper bracket 10 is formed on a lower end of the front fork 3. A pair of upper and lower mounts 10a, 10a projecting radially and rearwardly are formed integral with the caliper bracket 10.

The disk braking device 1 comprises a disk plate 5 fixed to the hub 2a of the front wheel 2 to rotate with the front wheel 2, a pad unit 6 that generates a frictional force between it and the disk plate 5, a piston mechanism 7 that brings the pad unit 6 into pressure contact with the disk plate 5, and a caliper body 8 that holds the piston mechanism 7.

The disk plate 5 comprises a plate body 18 fixed to an outer side surface of the hub 2a by means of a plurality of bolts 17, and a brake disk 20 joined to an outer periphery of the plate body 18 by means of a plurality of rivet type pins 19.

The piston mechanism 7 comprises three pairs of left and right pistons 9a, 9b, 9c arranged in opposition to one another along an outer periphery of the disk plate 5. All the respective pistons 9a, 9b, 9c have the same cylinder area s1 to s3 and are composed of first left and right piston portions 7a having one piston 9a and second left and right piston portions 7b having two pistons 9b, 9c. Thereby, the second piston portions 7b have a total cylinder area (s2 + s3) twice a cylinder area s1 of the first piston portions 7a.

The first piston portions 7a having a small cylinder area are arranged on an entering side of the disk plate 5 and the second piston portions 7b are arranged on a leaving side.

The caliper body 8 comprises first, second, and third left and right piston holding portions 8a, 8b, 8c arranged opposingly with the disk plate 5 therebetween, a bridge 8d arranged in a manner to straddle an outside of the disk plate 5 and to join the first, second, and third left and right piston holding portions 8a to 8c together, and radial mount bosses 8e, 8e formed integral with ends of the first and third piston holding portions 8a, 8c.

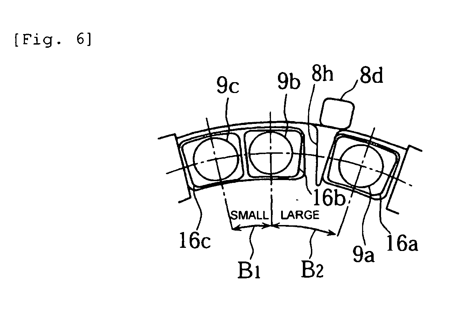

The bridge 8d is arranged between the first and second piston portions 7a, 7b and in a position a little offset toward the first piston portion 7a. Also, as shown in Fig. 6, a piston interval B1 in the second piston portions 7b is set to be smaller than an interval B2 between the pistons 9b in the second piston portions 7b and the pistons 9a in the first piston portions.

The first to third left and right piston holding portions 8a to 8c, respectively, are formed with piston holding holes 8a' to 8c'. In working the respective left and right piston holding holes 8b' to 8c' opposed to each other, there is adopted a method of forming the left and right piston holding holes 8b', 8b' at a time by means of machining with a cutting tool, which is inserted through a work hole 8g formed on a side wall (inner side wall) of the caliper body 8. The pistons 9b, 9b, respectively, are inserted into the left and right piston holding holes 8b', 8b' through the work hole 8g, and thereafter the work hole 8g are closed oiltightly by a plug material 13. The above is the same with the remainder 8a', 8c' of the piston holding holes.

The caliper body 8 in the embodiment has a monoblock structure, in which the first to third left and right piston holding portions 8a to 8c are joined integrally by the bridge 8d. The work hole 8g is formed on the first to third right piston holding portions 8a to 8c and the mount bosses 8e are formed on the first to third left piston holding portions 8a to 8c in opposition to the work hole 8g. The upper and lower mount bosses 8e, 8e are clamped and fixed to the respective mounts 10a of the caliper bracket 10 by means of bolts 12, 12 threadedly inserted from radially outward.

The pistons 9a to 9c are inserted into and arranged in the respective holding holes 8a' to 8c' of the first to third left and right piston holding portions 8a to 8c to be able to advance and retreat. Hydraulic pressure chambers a are defined between the respective pistons 9a to 9c and bottoms of the holding holes 8a' to 8c'.

The caliper body 8 is formed with a hydraulic pressure supply port 8f, through which a working oil is supplied to the respective hydraulic pressure chambers a. A master cylinder is connected to the hydraulic pressure supply port 8f through a brake hose (not shown) and a brake lever is connected to the master cylinder. The master cylinder and the brake lever are arranged on the steering handle described above.

The pad unit 6 comprises base plates 15, against which the respective left and right pistons 9a to 9c abut, and friction members 16 fixed to the base plates 15. The friction members 16 are opposed to the brake disk 20 to be able to abut thereagainst.

The pad unit 6 comprises first and second pad unit portions 6a, 6b having a total friction member area p1: (p2 + p3) of a ratio corresponding to a total cylinder area s1: (s2 + s3) of the first and second left and right piston portions 7a, 7b. More specifically, friction members 16a fixed to first base plates 15a of the first pad unit portion 6a have a friction member area p1 corresponding to a cylinder area s1 of the first piston portions 7a. Also, friction members 16b, 16c fixed to second base plates 15b of the second pad unit 6b have a total friction member area (p2 + p3) corresponding to a total cylinder area (s2 + s3) of the second piston portions 7b, that is, a total friction member area twice that of the friction members 16a. In addition, the respective friction member areas p1 to p3 are a little larger than the respective cylinder areas s1 to s3.

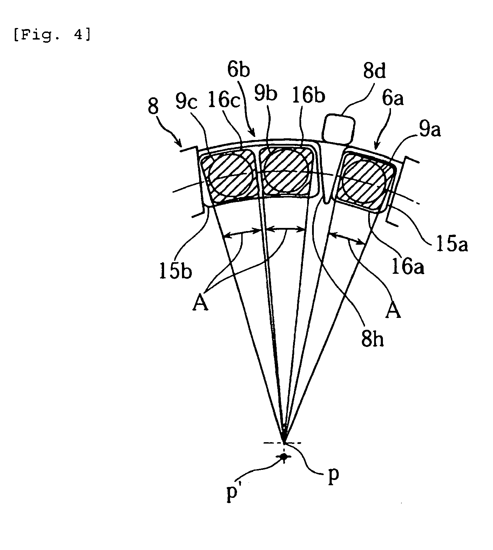

The respective left and right friction members 16a to 16c are arranged to be radial about a point p positioned close to a center p' of rotation of the disk plate 5 and all formed to be the same in shape. In this manner, the respective friction members 16a to 16c are in the form of a trapezoid, which is increased in dimension A in a direction of rotation as it goes outward from a center (see Fig. 4). In addition, the radially central point p may agree with the center p' of rotation of the disk plate 5.

A torque bearer 8h is formed between the first and second left and right pad unit portions 6a, 6b of the caliper body 8. The torque bearer 8h is arranged in a manner to bear torque exerted by the first pad unit portions 6a, that is, in such a manner that downstream edges of the first base plates 15a in a direction, in which the disk plate 5 enters, abut against the torque bearer 8h. The bridge 8d is positioned on a side of the torque bearer 8h toward the first pad unit portions 6a and formed integral with the torque bearer 8h.

When the brake lever described above is operated, the master cylinder generates a hydraulic pressure and the hydraulic pressure is supplied to the respective hydraulic pressure chambers a through the hydraulic pressure supply port 8f of the caliper body 8. Then the respective pistons 9a to 9c advance to bring the friction members 16a to 16c into pressure contact with the disk plate 5 to interpose the disk plate 5 therebetween. Thereby, the generated frictional force brakes the front wheel 2.

According to the embodiment, since the respective pistons 9a to 9c, whose cylinder areas s1 to s3 are the same, are composed of the first piston portions 7a and the second piston portions 7b, which are different from each other to have a cylinder area s1 and a total cylinder area (s2 + s3), respectively, and the pad unit 6 is composed of the first and second pad unit portions 6a, 6b, respectively, having a friction member area p1 and a friction member area (p2 + p3), which correspond to total cylinder areas s1 and (s2 + s3), it is possible to suppress warp of the friction members 16a to 16c and dispersion in bearing at the time of pressure contact in the case where the pistons are increased in number to heighten a braking force, thus enabling making reaction favorable at the time of braking.

Also, since the pad unit 6 is composed of the first and second pad unit portions 6a, 6b, respectively, having a friction member area p1 and a friction member area (p2 + p3), which correspond to total cylinder areas s1 and (s2 + s3), the respective friction members 16a to 16c wear according to a cylinder area, that is, uniformly, so that it is possible to make a service life substantially uniform.

According to the embodiment, since the respective friction members 16a to 16c are made the same in number and in shape as the corresponding pistons 9a to 9c, they can be formed with the use of one die for pad unit molding and improved in productivity.

Also, since the respective friction members 16a to 16c are formed so as to be radial about the point p positioned close to the center p' of the disk plate 5, the outer peripheral portion of the disk plate 5, which is high in rotational frequency, can be made large in frictional area, thus enabling suppressing local abrasion of the friction members 16a to 16c.

According to the embodiment, since the first piston portions 7a having a small cylinder area s1 are arranged on an entering side of the disk plate 5, a braking force exerted by the first piston portions 7a becomes relatively small, so that it is possible to lessen a strength demanded of the torque bearer 8h of the caliper body 8, thus enabling miniaturization and lightening of the caliper body 8.

Also, since the torque bearer 8h is arranged between the first and second pad unit portions 6a, 6b to bear torque exerted by the first pad unit portions 6a, it is possible to lessen a strength demanded of the torque bearer 8h, so that miniaturization and lightening of the caliper body 8 are enabled correspondingly.

According to the embodiment, since the bridge 8d that joins the left and right piston holding portions 8a to 8c together to make them integral is arranged between the first and second pad unit portions 6a, 6b and positioned a little offset toward the first pad unit portion 6a, the caliper body 8 toward the first pad unit portion 6a can be increased in stiffness, so that it is possible to further heighten responsibility of the pad unit portion 6a at the time of braking.

According to the embodiment, since a piston interval B1 in the second piston portions 7b is made smaller than an interval B2 between the pistons 9a, 9b with the torque bearer 8h therebetween, it is possible to inhibit the caliper body 8 on the side of the second piston portions 7b, on which the bridge is not present, from being decreased in stiffness, to heighten responsibility at the time of braking, and to suppress brake noise.

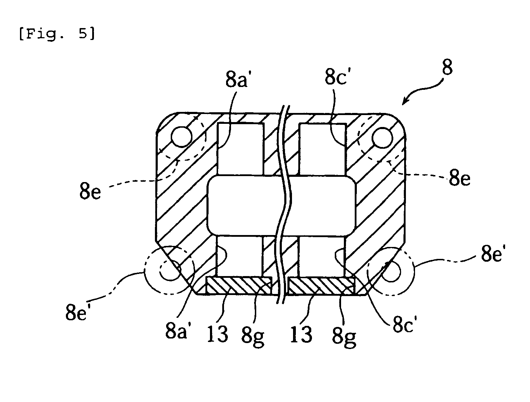

According to the embodiment, since the work hole 8g is formed on one of the left and right piston holding portions 8a to 8c and the bosses 8e are formed on the other thereof, it is possible to make the caliper body 8 small in size. More specifically, as shown in Fig. 5, when mount bosses 8e' (see two-dot chain line) are formed on a side of the piston holding portions 8a to 8c toward the work hole 8g, there is caused a problem that the whole caliper body 8 becomes large in size for reasons of ensuring a predetermined dimension between the work hole 8g, which is larger in diameter than the piston holes, and the bosses 8e.

In addition, while the embodiment has been described with respect to the case where the three pistons 9a to 9c, whose cylinder areas s1 to s3 are the same, are allotted to the first and second piston portions 7a, 7b, the present teaching is not limited thereto.

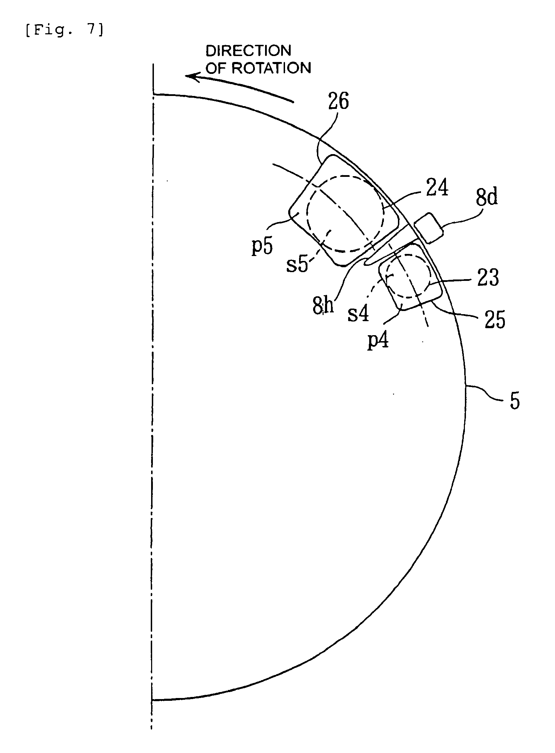

Fig. 7 is a view showing a piston mechanism not falling under the scope of the claims. The piston mechanism according to the embodiment comprises two small diameter and large diameter pistons 23, 24, whose cylinder areas s4 and s5 are small and large. A pad unit comprises a small pad unit 25 and a large pad unit 26, which have friction member areas p4 and p5 corresponding to the cylinder areas s4 and s5 of the small diameter and large diameter pistons 23, 24.

According to the embodiment, it is possible to suppress warp of the friction members and dispersion in bearing to make reaction favorable at the time of braking, thus producing the same effect as that in the embodiment described above.

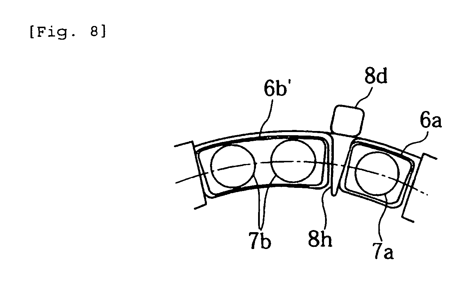

Also, while according to the embodiment the friction members are made the same in number and in shape as the pistons, the mechanism comprises a first pad unit portion 6a having a total friction member area corresponding to a cylinder area of a first piston portion 7a and a second pad unit 6b' having a total friction member area corresponding to a total cylinder area of a second piston portion 7b as shown in Fig. 8, and in this case substantially the same effect as that in the embodiment described above is also produced.

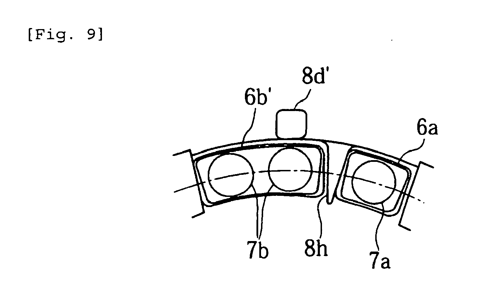

Further, while according to the embodiment the bridge 8d of the caliper body 8 is arranged between the first and second piston portions 7a, 7b, a bridge 8d' according to the present teaching may be arranged in the vicinity of a center of pistons 9b in second piston portions 7b, which are large in friction member area, as shown in Fig. 9. In this case, it is possible to heighten a caliper, which supports a second pad unit 6b' having a large friction member area, in stiffness, thus enabling suppressing brake noise due to surface vibration of pads.

While the embodiment has been described taking an example of a front disk braking device of a motorcycle, the braking device according to the above can be applied to a disk braking device for a rear wheel and is not limited to motorcycles but applicable to small-sized three-wheelers, four-wheelers, ATV (all-terrain vehicle), etc.

The description above discloses (amongst others) an embodiment of a disk braking device comprising a disk plate fixed to a wheel, a pad unit that generates a frictional force between it and the disk plate, a piston mechanism that brings the pad unit into pressure contact with the disk plate, and a caliper body that holds the piston mechanism, and wherein the piston mechanism comprises a plurality of piston portions arranged along an outer periphery of the disk plate to have different total cylinder areas, and the pad unit comprises a plurality of pad unit portions comprising a base plate, against which the piston abuts, and a friction member fixed to the base plate to abut against the disk plate and having a total friction member area corresponding to the total cylinder area.

With the disk braking device according to the above embodiment, the piston mechanism comprises a plurality of piston portions having different total cylinder areas, and the pad unit comprises a plurality of pad unit portions having total friction member areas corresponding to the total cylinder areas, so that it is possible to suppress warp of the friction members and dispersion in bearing at the time of pressure contact in the case where the pistons are increased in number to heighten a braking force, thus enabling making reaction favorable at the time of braking.

Also, since the pad unit is constructed to have a total friction member area corresponding to a total cylinder area, the friction members of the respective pad unit portions wear according to a cylinder area, so that it is possible to make the respective pad unit portions substantially uniform in service life.

The description above discloses, in order to provide a disk braking device capable of suppressing warp of friction members and deterioration in reaction at the time of braking and suppressing generation of a difference in a service life of the friction members in the case where pistons are increased in number to heighten a braking force, an embodiment comprising a piston mechanism 7 comprises pistons 9a to 9c arranged along an outer periphery of a disk plate 5, the pistons 9a to 9c are allotted to a plurality of piston portions 7a, 7b, which are different from each other to have a cylinder area s1 and a total cylinder area (s2 + s3), and a pad unit 6 is divided into a plurality of pad unit portions 6a, 6b having total pressure contact areas p1 and (p2 + p3) corresponding to total cylinder areas s1 and (s2 + s3).

## Claims

1. Disk braking device comprising a disk plate (25) fixed to a wheel (2), a pad unit (6) that generates a frictional force between it and the disk plate, and a piston mechanism (7) that brings the pad unit into pressure contact with the disk plate,
wherein the piston mechanism comprises a plurality of piston portions (7a,7b) having different total cylinder areas (51-53),
and wherein the pad unit comprises a plurality of pad unit portions (6a,6b), each comprising a base plate (15), against which the pistons (9a-9c) abut, and a friction member (16) fixed to the base plate to abut against the disk plate and having a total friction member area corresponding to the respective total cylinder areas,
**characterized in that**
the plurality of piston portions (7a,7b), are having a different number of pistons, said pistons (9a-9c) being the same in cylinder area, wherein the pad unit comprises the pad unit portions respectively corresponding to the piston portions, and wherein the respective pad unit portions have a total friction member area corresponding to a total cylinder area of the respective piston portions.

2. Disk braking device according to claim 1, **characterized in that** the friction members are the same in shape.

3. Disk braking device according to claim 1 or 2, **characterized in that** the friction members are arranged radially about a point (p1) positioned close to a center of the disk plate (p).

4. Disk braking device according to one of the claims 1 to 3, **characterized in that** those ones out of the respective piston portions, which are small in total cylinder area, are arranged on an entering side of the disk plate.

5. Disk braking device according to one of the claims 1 to 4, **characterized by** further comprising a torque receiver (8h) that hinders movements of the pad unit portions or the pad unit, wherein the torque receiver is arranged between the respective pad unit portions or the respective pad units in a manner to bear torque exerted by that pad unit portion or that pad unit, which is small in total friction member area.

6. Disk braking device according to one of the claims 1 to 5, **characterized by** further comprising a caliper body (8) that holds the piston mechanism, wherein the caliper body comprises piston holding portions arranged in opposition to each other with the disk plate therebetween, a bridge (8d) that joins the piston holding portions together in a manner to straddle the disk plate, and wherein the bridge is arranged offset toward any one of the pad unit portions.

7. Disk braking device according to claim 6, **characterized in that** the bridge is arranged toward a pad unit portion, which is small in total friction member area, or wherein the bridge is arranged toward a pad unit portion, which is large in total friction member area, or wherein the bridge is formed integral with the torque receiver.

8. Disk braking device according to one of the claims 1 to 7, **characterized in that** a piston interval of one out of the piston portions, which is large in total cylinder area, is set to be smaller than an interval between a piston in a piston portion, which is small in total cylinder area, and a piston in a piston portion, which is adjacent to the piston portion with the torque bearer therebetween and is large in total cylinder area.

9. Disk braking device according to one of the claims 1 to 8, **characterized by** further comprising a caliper body that holds the piston mechanism, wherein the caliper body comprises a pair of piston holding portions arranged opposingly with the disk plate therebetween, one of the piston holding portions is formed with a work hole for formation of a piston holding hole, and the other of the piston holding portions is formed with a mount hole for mounting the caliper body on a vehicle side.

10. Motorcycle comprising the disk braking device according to any one of claims 1 to 9.

## Patentansprüche

1. Scheibenbremsvorrichtung, die aufweist eine Scheibenplatte (25), befestigt an einem Rad (2), eine Klotzeinheit (6), die eine Reibungskraft zwischen sich und der Scheibenplatte erzeugt, und eine Kolbenvorrichtung (7), die die Klotzeinheit in Druckkontakt mit der Scheibenplatte bringt,
wobei die Kolbenvorrichtung eine Mehrzahl von Kolbenabschnitten (7a, 7b) aufweist, die unterschiedliche Gesamt- Zylinderflächen (S1 - S3) haben,
und wobei die Klotzeinheit eine Mehrzahl von Klotzeinheits- Abschnitten (6a, 6b) aufweist; von denen jede eine Basisplatte (15) aufweist, gegen die die Kolben (ga -gl) anliegen, und ein Reibungsteil (16), befestigt an der Basisplatte, um gegen die Scheibenplatte anzuliegen und um eine gesamte Reibungselement- Fläche zu haben, die den jeweiligen Gesamt- Zylinderflächen entspricht,
**dadurch gekennzeichnet, dass**
die Mehrzahl von Kolbenabschnitten (7a, 7b) eine unterschiedliche Anzahl von Kolben (ga - gc) haben, wobei die Kolben dieselben in der Zylinderfläche sind,
wobei die Klotzeinheit jeweils die Klotzeinheit- Abschnitte aufweist, die den Kolbenabschnitten entsprechen, und wobei die jeweiligen Klotzeinheit- Abschnitte eine gesamte Reibungselement- Fläche entsprechend einer Gesamt- Zylinderfläche der jeweiligen Kolbenabschnitte haben.

2. Scheibenbremsvorrichtung nach Anspruch 1, **dadurch gekennzeichnet, dass** die Reibungselemente in der Form dieselben sind.

3. Scheibenbremsvorrichtung nach Anspruch 1 oder 2, **dadurch gekennzeichnet, dass** die Reibungselemente radial um einen Punkt (p1), positioniert nahe zu einer Mitte der Scheibenplatte (p), angeordnet sind.

4. Scheibenbremsvorrichtung nach einem der Ansprüche 1 bis 3, **dadurch gekennzeichnet, dass** diejenigen von den jeweiligen Kolbenabschnitten, die in der Gesamt- Zylinderfläche klein sind, auf einer Eingangsseite der Scheibenplatte angeordnet sind.

5. Scheibenbremsvorrichtung nach einem der Ansprüche 1 bis 4, **gekennzeichnet durch** außerdem aufweisend einen Drehmomentaufnehmer (8h), der Bewegungen der Klotzeinheit- Abschnitte oder der Klotzeinheit verhindert, wobei der Drehmomentaufnehmer zwischen den jeweiligen Klotzeinheit- Abschnitten oder den jeweiligen Klotzeinheiten in einer Weise angeordnet ist, um das Drehmoment, ausgeübt **durch** den Klotzeinheit- Abschnitt oder die Klotzeinheit, der in der gesamten Reibungsteilfläche klein ist, zu tragen.

6. Scheibenbremsvorrichtung nach einem der Ansprüche 1 bis 5, **gekennzeichnet durch** außerdem aufweisend einen Rachenkörper (8), der die Kolbenvorrichtung hält, wobei der Rachenkörper Kolbenhalteabschnitte aufweist, angeordnet zueinander gegenüberliegend mit der Scheibenplatte dazwischen, eine Brücke (8d), der die Kolbenhalteabschnitte gemeinsam in einer Weise verbindet, um die Scheibenplatte zu überbrücken, und wobei die Brücke versetzt in Richtung zu jedem der Klotzeinheit- Abschnitte angeordnet ist.

7. Scheibenbremsvorrichtung nach Anspruch 6, **dadurch gekennzeichnet, dass** die Brücke in Richtung zu einem Klotzeinheit- Abschnitte angeordnet ist, der in der Gesamt- Reibungselement- Fläche klein ist, oder wobei die Brücke in Richtung zu einem Klotzeinheit- Abschnitt, der im Gesamt- Reibungselementfläche groß ist, oder wobei die Brücke einstückig mit dem Drehmomentaufnehmer angeordnet ist.

8. Scheibenbremsvorrichtung nach einem der Ansprüche 1 bis 7, **dadurch gekennzeichnet, dass** ein Kolbenintervall von einem der Kolbenabschnitte, der in der Gesamt- Zylinderfläche groß ist, festgelegt ist, kleiner zu sein, als ein Intervall zwischen einem Kolben in einem Kolbenabschnitt, der in der Gesamt- Zylinderfläche klein ist, und einem Kolben in einem Kolbenabschnitt, der zu dem Kolbenabschnitt mit dem Drehmomentträger dazwischen, benachbart ist, und der in der Gesamt- Zylinderfläche groß ist.

9. Scheibenbremsvorrichtung nach einem der Ansprüche 1 bis 8, **gekennzeichnet durch** außerdem aufweisend einen Rachenkörper, der die Kolbenvorrichtung hält, wobei der Rachenkörper aufweist ein Paar von Kolbenhalteabschnitten, angeordnet gegenüberliegend mit der Scheibenplatte dazwischen, wobei einer der Kolbenhalteabschnitte mit einer Werkstücksbohrung zur Bildung einer Kolbenhaltebohrung versehen ist, und der andere der Kolbenhalteabschnitte mit einer Montagebohrung zum Montieren des Rachenkörpers auf einer Seite des Fahrzeuges versehen ist.

10. Motorrad, aufweisend die Scheibenbremsvorrichtung nach einem der Ansprüche 1 bis 9.

## Revendications

1. Dispositif de frein à disque comprenant une plaque de disque (25) fixée sur une roue (2), une unité de plaquette (6) qui génère une force de frottement entre elle-même et la plaque de disque, et un mécanisme de piston (7) qui amène l'unité de plaquette en contact de pression avec la plaque de disque,
dans lequel le mécanisme de piston comprend une pluralité de parties de piston (7a, 7b) ayant des surfaces totales de cylindre différentes (51-53) ;
et dans lequel l'unité de plaquette comprend une pluralité de parties d'unité de plaquette (6a, 6b), chacune comprenant une plaque de base (15), contre laquelle le piston (9a-9c) vient en butée, et un élément de frottement (16) fixé sur la plaque de base pour venir en butée contre la plaque de disque et ayant une surface totale d'élément de frottement correspondant aux surfaces totales de cylindre respectives,
**caractérisé en ce que** :
la pluralité de parties de piston (7a, 7b) ayant un nombre différent de pistons, lesdits pistons (9a-9c) étant les mêmes dans la surface de cylindre, dans lequel l'unité de plaquette comprend les parties d'unité de plaquette correspondant respectivement aux parties de piston, et dans lequel les parties d'unité de plaquette respectives ont une surface totale d'élément de frottement correspondant à une surface totale de cylindre des parties de piston respectives.

2. Dispositif de frein à disque selon la revendication 1, **caractérisé en ce que** les éléments de frottement ont la même forme.

3. Dispositif de frein à disque selon la revendication 1 ou 2, **caractérisé en ce que** les éléments de frottement sont agencés de manière radiale autour d'un point (p1) positionné à proximité d'un centre de la plaque de disque (p).

4. Dispositif de frein à disque selon l'une des revendications 1 à 3, **caractérisé en ce que** celles hors des parties de piston respectives, qui sont petites dans la surface totale de cylindre sont agencées sur un côté d'entrée de la plaque de disque.

5. Dispositif de frein à disque selon l'une des revendications 1 à 4, **caractérisé en ce qu'**il comprend en outre un récepteur de couple (84) qui gêne les mouvements des parties d'unité de plaquette ou de l'unité de plaquette, dans lequel le récepteur de couple est agencé entre les parties d'unité de plaquette respectives ou les unités de plaquette respectives afin de supporter le couple exercé par cette partie d'unité de plaquette ou cette unité de plaquette, qui est petite dans la surface totale d'élément de frottement.

6. Dispositif de frein à disque selon l'une des revendications 1 à 5, **caractérisé en ce qu'**il comprend en outre un corps d'étrier (8) qui maintient le mécanisme de piston, dans lequel le corps d'étrier comprend des parties de support de piston agencées en opposition entre elles avec la plaque de disque entre elles, un pont (8d) qui rassemble les parties de support de piston ensemble afin d'enjamber la plaque de disque, et dans lequel le pont est agencé décalé vers l'une quelconque des parties d'unité de plaquette.

7. Dispositif de frein à disque selon la revendication 6, **caractérisé en ce que** le pont est agencé vers une partie d'unité de plaquette, qui est petite dans la surface totale d'élément de frottement ou dans lequel le pont est agencé vers une partie d'unité de plaquette qui est importante dans la surface totale d'élément de frottement, ou dans lequel le pont est formé de manière solidaire avec le récepteur de couple.

8. Dispositif de frein à disque selon l'une des revendications 1 à 7, **caractérisé en ce qu'**un intervalle de piston de l'une hors des parties de piston qui est importante du point de vue de la surface totale de cylindre, est déterminé pour être plus petit dans un intervalle entre un piston et une partie de piston, qui est petite du point de vue de la surface totale de cylindre, et un piston dans une partie de piston, qui est adjacente à la partie de piston avec le support de couple entre eux et est importante du point de vue de la surface totale de cylindre.

9. Dispositif de frein à disque selon l'une des revendications 1 à 8, **caractérisé en ce qu'**il comprend en outre un corps d'étrier qui maintient le mécanisme de piston dans lequel le corps d'étrier comprend une paire de parties de support de piston agencées de manière opposée avec la plaque de disque entre elles, l'une des parties de support de piston est formée avec un trou d'usinage pour la formation d'un trou de support de piston, et l'autre partie des parties de support de piston est formée avec un trou de montage pour monter le corps d'étrier sur un côté de véhicule.

10. Moto comprenant le dispositif de frein à disque selon l'une quelconque des revendications 1 à 9.
